# EUROPEAN PATENT APPLICATION

(11) **EP 4 844 999 A1**
(43) Date of publication of application: **25.11.2026**
(21) Application number: 26176782.6
(22) Date of filing: 06.05.2026
(51) Int. Cl.: H02K 11/40, H02K 11/30, H02K 11/33

(54) **FLUID PUMP**

(30) Priority: 21.05.2025 DE 102025119882
(71) Applicant: VALEO EMBRAYAGES, 80009 Amiens (FR)
(72) Inventor: SAUERTEIG, Frank, 96106 Ebern (DE); STOESSEL, Roland, 96106 Ebern (DE); DIRAUF, Markus, 96106 Ebern (DE)
(74) Representative: Valeo Powertrain Systems

(57) **Abstract**

A fluid pump (10) has a stator module (40), a control board housing (24), in which a control board (26) is arranged, and a grounding element (64), which electrically conductively connects the stator module (40) to a grounding contact (60) of the control board (26). The grounding element (64) is in this case fastened to the control board housing (24).

## Description

The invention relates to a fluid pump having a stator module, a control board housing, in which a control board is arranged, and a grounding element, which electrically conductively connects the stator module to a grounding contact of the control board.

Fluid pumps of this type are known.

A challenge with known fluid pumps is to ensure high electromagnetic compatibility (EMC). However, this usually leads to a complex construction of the fluid pump and thus to a high production outlay.

An object of the invention is to provide a fluid pump which has good electromagnetic compatibility and is of simple design.

The object is achieved by a fluid pump having a stator module, a control board housing, in which a control board is arranged, and a grounding element, which electrically conductively connects the stator module to a grounding contact of the control board. The grounding element is in this case fastened to the control board housing.

It has been recognized according to the invention that in this way the grounding element is arranged in a defined manner in the fluid pump with little effort and thus effectively suppresses electromagnetic interference fields which impair the electromagnetic compatibility. In addition, since the grounding element is attached to the already existing control board housing, no additional component is required to fasten the grounding element. The fluid pump is thus of a particularly simple design and can be produced with little outlay.

In one aspect, the grounding element extends through the control board housing, as a result of which it is fastened to and protected by the control board housing particularly reliably.

In this case, the grounding element may be injection-moulded into the control board housing in order to fasten the grounding element to the control board housing with little effort and permanently ensure a defined arrangement of the grounding element.

Furthermore, it may be provided that the control board housing has a feedthrough through which the grounding element extends. An intermediate space between the control board housing and the grounding element is in this case sealed by means of a seal. The grounding element may be at least partially fastened to the control board housing by way of the seal. This design has the advantage that the feedthrough for the grounding element is reliably sealed.

In one embodiment, the grounding element is pressed into the control board in the region of the grounding contact and is thus effectively connected to the control board with little effort.

Additionally or alternatively, the grounding element may be electrically conductively connected to a stator of the stator module in order to ensure high electromagnetic compatibility.

According to one aspect, the control board is potted with the control board housing to protect the control board and permanently ensure a defined arrangement of the control board.

In a further embodiment, the control board housing has a partition which separates the stator module from the control board in a fluid-tight manner. The control board is thus reliably separated from the stator module and, for example, fluid surrounding the stator module.

In this case, the control board housing may have an opening which is arranged axially opposite from the partition. As a result, the control board is accessible and can be easily fitted in the control board housing by way of the opening. Furthermore, the control board housing is in this way designed in a material-efficient manner and can be produced in one piece with little outlay.

Furthermore, it may be provided that the control board housing is connected directly to a motor housing in which the stator module is arranged. The fluid pump is thus compact and formed from particularly few individual parts.

Further advantages and features will become apparent from the following description and from the appended drawings. In the drawings:
- Figure 1 shows a fluid pump according to the invention in a plan view, and
- Figure 2 shows the fluid pump in a sectional view along the plane II - II in Figure 1.

The detailed description below in combination with the appended drawings, in which the same numerals refer to identical elements, is intended as a description of various embodiments of the disclosed subject matter, and is not supposed to represent the individual embodiments. Each embodiment described in this disclosure is used purely as an example or illustration and should not be interpreted as preferred or advantageous relative to other embodiments.

All the features disclosed below with reference to the exemplary embodiments and/or the accompanying figures can be combined singly or in any desired subcombination with features of the aspects of the present disclosure, including features of preferred embodiments, provided that the resulting combination of features is meaningful for a person skilled in the art.

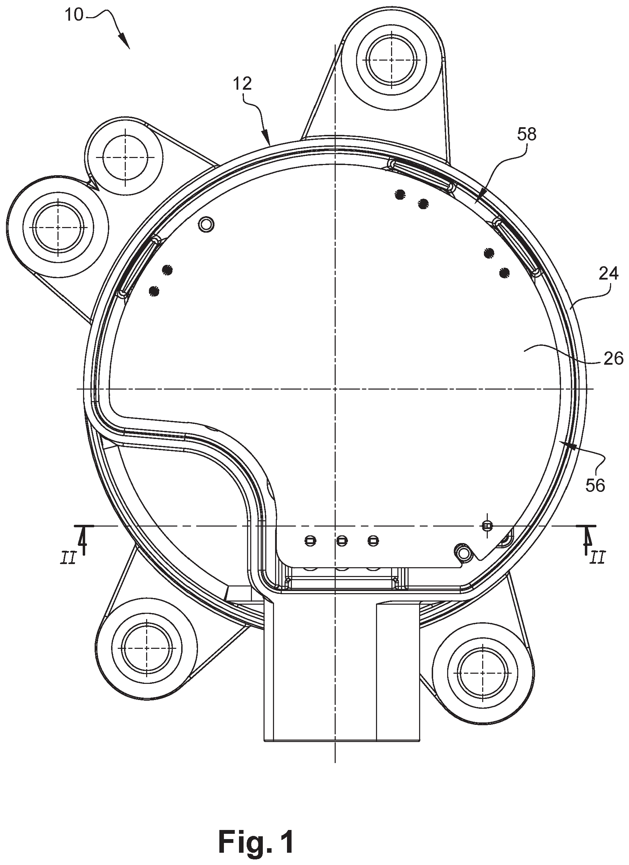

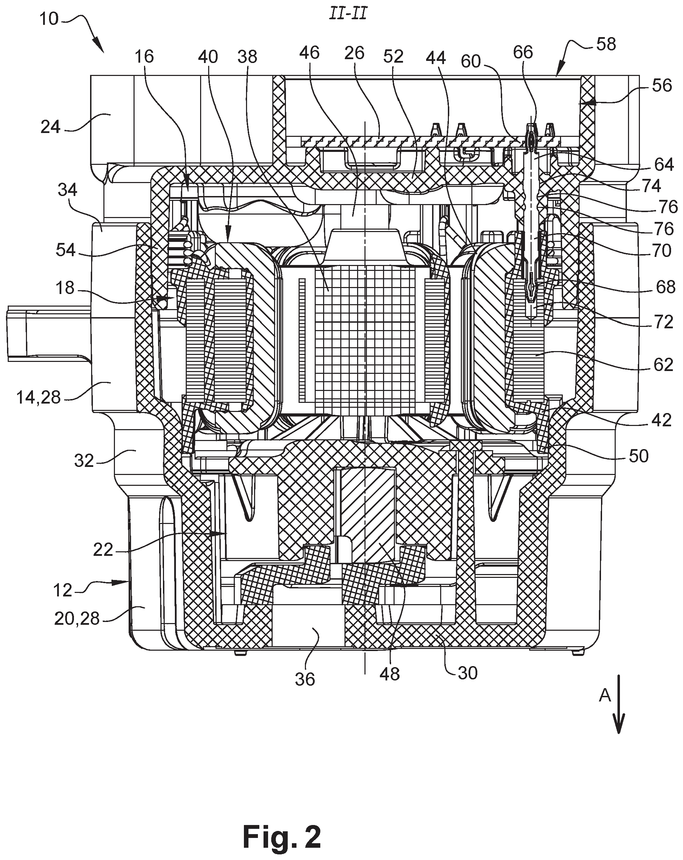

In Figures 1 and 2, a fluid pump 10 is shown.

The fluid pump 10 is, for example, set up to provide a hydraulic oil flow for a drive train of a motor vehicle. This hydraulic oil flow may be used to lubricate or cool components of the drive train. The hydraulic oil flow may also be intended to be converted in actuators into an actuating stroke, for example in order to shift a clutch.

In the embodiment shown, the fluid pump 10 has a housing 12 with a motor housing 14, in the interior space 16 of which (see Figure 2) an electric motor 18 is arranged, a pump housing 20, in which a pump module 22 is accommodated, and a control board housing 24, in which a control board 26 is arranged.

The motor housing 14 and the pump housing 20 are formed here as a one-piece housing section 28, which has a pot shape, i.e. a bottom 30 and a side wall 32, which extends substantially in the shape of a hollow cylinder counter to the axial direction A from the bottom 30 to a housing edge 34.

The housing section 28 and the control board housing 24 are, for example, injection-moulded components made of plastic.

The pump housing 20 has a plurality of fluid inlets or outlets 36, for example in the bottom 30, by way of which fluid is sucked in or discharged by the pump module 22 during operation.

In an alternative embodiment, the motor housing 14 and the pump housing 20 are formed by separate housing parts which are connected to one another.

The electric motor 18 has a rotor 38 and also a stator module 40 with a support 42 and a stator winding 44.

The support 42 consists of plastic and here forms a slot insulation, to which the stator winding 44 is attached.

In this context, the stator module 40 is arranged in a stationary manner in the housing 12, and the rotor 38 is connected in terms of drive via a shaft 46 to the pump module 22, for example to a pump rotor 48 of the pump module 22.

At its end 50 facing the pump module 22, the support 42 is fastened to the motor housing 14, for example in a materially bonded manner.

Arranged on the motor housing 14 axially opposite from the pump housing 20 is the control board housing 24, which forms a cover that closes the interior space 16.

For this purpose, the control board housing 24 has a partition 52, which extends perpendicularly to the axial direction A.

The control board housing 24 is fastened to the motor housing 14 by way of a fastening section 54 facing the electric motor 18, for example in a materially bonded manner.

The control board 26 accommodated in the interior 56 of the control board housing 24 is set up to actuate the electric motor 18 and, for this purpose, is connected to the latter in a signal-transmitting manner.

Axially opposite from the motor housing 14, the control board housing 24 has an opening 58, by way of which the control board 26 can be inserted in the axial direction A into the interior 56 of the control board housing 24 during assembly.

The control board 26 may be potted in the control board housing 24, for example by the interior 56 being at least partially filled with a potting material (not shown in the figures).

In order to reduce electromagnetic interference fields generated by the control board 26 during operation and thus improve the electromagnetic compatibility of the fluid pump 10, the control board 26 has a grounding contact 60, by way of which it is electrically conductively connected to the stator 62 of the stator module 40 by means of a grounding element 64.

In the embodiment shown, the grounding element 64 is rod-shaped and has a first axial end 66 and an opposite second axial end 68, which are connected to one another by way of a connecting section 70.

At the first axial end 66, the grounding element 64 is pressed into the grounding contact 60 counter to the axial direction A and is thus connected to the control board 26 in a force-fitting and form-fitting manner.

At the second axial end 68, the grounding element 64 is pressed into a bore 72 in the stator 62 in the axial direction A and is thus connected to the stator module 40 in a force-fitting and form-fitting manner.

In this case, the grounding element 64 extends in the axial direction A through a feedthrough 74 in the partition 52 and thus through the control board housing 24.

In the present embodiment, the grounding element 64 is injection-moulded into the partition 52 and in this way fastened in a form-fitting manner to the control board housing 24.

Here, the partition 52 surrounds the connecting section 70, which has a plurality of radial recesses 76.

The radial recesses 76 are, for example, formed by axial sections with a reduced cross section, such as constrictions or grooves.

In an alternative embodiment, the connecting section may have any number of radial recesses 76, which may each be of any desired design.

Due to the fact that the partition 52 engages in the radial recesses 76, the grounding element 64 is reliably fastened in the control board housing 24 in the axial direction A.

The radial recesses 76 are optional and in an alternative embodiment can be omitted.

In a further alternative embodiment, the grounding element 64 is inserted into the feedthrough 74 after the control board housing 24 has been produced.

In this case, the feedthrough 74 is designed such that the grounding element 64 can be inserted with little effort, for example in the axial direction A.

Furthermore, a seal may be provided in order to seal an intermediate space between the partition 52 and the grounding element 64.

In all cases, the partition 52 forms a barrier which separates the interior 56 of the control board housing 24 in a fluid-tight manner from the interior space 16 of the motor housing 14.

In this way, a fluid pump 10 which is of simple design and has good electromagnetic compatibility is provided.

## Claims

1. Fluid pump (10) having a stator module (40), a control board housing (24), in which a control board (26) is arranged, and a grounding element (64), which electrically conductively connects the stator module (40) to a grounding contact (60) of the control board (26), **characterized in that** the grounding element (64) is fastened to the control board housing (24).

2. Fluid pump (10) according to Claim 1, **characterized in that** the grounding element (64) extends through the control board housing (24).

3. Fluid pump (10) according to Claim 2, **characterized in that** the grounding element (64) is injection-moulded into the control board housing (24).

4. Fluid pump (10) according to Claim 2, **characterized in that** the control board housing (24) has a feedthrough (74), through which the grounding element (64) extends, wherein an intermediate space between the control board housing (24) and the grounding element (64) is sealed by means of a seal.

5. Fluid pump (10) according to one of the preceding claims, **characterized in that** the grounding element (64) is pressed into the control board (26) in the region of the grounding contact (60).

6. Fluid pump (10) according to one of the preceding claims, **characterized in that** the grounding element (64) is pressed into the stator (62) at one end.

7. Fluid pump (10) according to one of the preceding claims, **characterized in that** the grounding element (64) is electrically conductively connected to a stator (62) of the stator module (40).

8. Fluid pump (10) according to one of the preceding claims, **characterized in that** the control board (26) is potted with the control board housing (24).

9. Fluid pump (10) according to one of the preceding claims, **characterized in that** the control board housing (24) has a partition (52), which separates the stator module (40) from the control board (26) in a fluid-tight manner.

10. Fluid pump (10) according to Claim 9, **characterized in that** the control board housing (24) has an opening (58), which is arranged axially opposite from the partition (52).

11. Fluid pump (10) according to one of the preceding claims, **characterized in that** the control board housing (24) is connected directly to a motor housing (14), in which the stator module (40) is arranged.
